# EUROPÄISCHE PATENTSCHRIFT

(11) **EP 3 511 353 B1**
(45) Veröffentlichungstag und Bekanntmachung des Hinweises auf die Patenterteilung: **07.06.2023**
(21) Anmeldenummer: 18151226.0
(22) Anmeldetag: 11.01.2018
(51) Int. Cl.: C08G 12/02, C08G 14/02, C09J 161/20, C08L 61/20, C08L 97/02

(54) **FORMALDEHYDFREIE BINDEMITTELZUSAMMENSETZUNG FÜR LIGNOCELLULOSEHALTIGE PLATTEN UND EIN VERFAHREN ZU DESSEN HERSTELLUNG**
FORMALDEHYDE-FREE ADHESIVE COMPOSITION FOR PANELS CONTAINING LIGNOCELLULOSE AND METHOD FOR THE PRODUCTION THEREOF
COMPOSITION DE LIANT SANS FORMALDÉHYDE POUR PLAQUES CONTENANT DE LA LIGNOCELLULOSE ET SON PROCÉDÉ DE FABRICATION

(43) Veröffentlichungstag der Anmeldung: 17.07.2019
(73) Patentinhaber: SWISS KRONO Tec AG, 6004 Luzern (CH)
(72) Erfinder: PFEIFFER, Sabrina, 16866 Kyritz (DE); KALWA, Norbert, 32805 Horn-Bad Meinberg (DE)
(74) Vertreter: Maikowski & Ninnemann Patentanwälte Partnerschaft mbB

(56) Entgegenhaltungen:
- EP-A1- 2 930 195
- EP-A1- 3 156 467
- US-A1- 2013 327 250

## Beschreibung

Die vorliegende Erfindung betrifft eine neuartige formaldehydfreie Bindemittelzusammensetzung, die Verwendung dieser Bindemittelzusammensetzung und ein Verfahren zur Herstellung dieser Bindemittelzusammensetzung.

### Beschreibung

Holzwerkstoffe (HWS), wie zum Beispiel Holzwerkstoffplatten, werden seit Jahrzehnten mit Bindemitteln auf Basis von Duroplasten als Bindemittel hergestellt. Die dabei am häufigsten zum Einsatz kommenden duroplastischen Bindemittel basieren auf Formaldehydharzen, wie zum Beispiel Harnstoff-Formaldehyd-Harzen, Melamin-Harnstoff-Formaldehyd-Harzen und Phenol-Formaldehyd-Harzen.

Die formaldehydhaltigen Harze werden durch eine Kombination aus Additions- und Kondensationsreaktionen von Formaldehyd mit den anderen Komponenten (Harnstoff, Melamin, Phenol) hergestellt. Die durch die genannten Polymerisationsreaktionen gebildeten Leime enthalten in der Regel Gemische aus Monomeren, Oligomeren und Polymeren.

Die genannten formaldehydhaltigen Harze bzw. Leime werden bei der Herstellung von Holzwerkstoffen mit Holzpartikeln oder Holzfasern vermischt und in Etagen- oder kontinuierlichen Pressen (Contipressen) unter Druck und Temperatur ausgehärtet. Aufgrund der während des Pressvorganges herrschenden Bedingungen, wie erhöhte Temperatur, pH-Wert, Feuchte und Ähnlichem, kann es jedoch zu einer Aufspaltung der verwendeten Harze in ihre entsprechenden Ausgangsverbindungen kommen. Dies gilt vor allem für formaldehydhaltige Leime bzw. Harze auf der Basis von Harnstoff und Harnstoff-Melamin. Entsprechend kommt es bei der genannten Rückspaltung der Harze zur Freisetzung von Formaldehyd, welcher allerdings als krebserregend angesehen wird. Auf Grund dieser Tatsache besteht ein großer Bedarf an Leimen, die entweder zu reduzierten Emissionen oder sogar zu gar keiner Formaldehydemission mehr führen.

Dies kann z.B. durch eine Verringerung des Molverhältnisses zwischen Formaldehyd und Harnstoff bzw. Harnstoff-Melamin erfolgen, da die Höhe der Emission des Formaldehyds in erheblicher Weise durch dieses Molverhältnis beeinflusst wird. Aus diesem Grunde wurde das Verhältnis zwischen Formaldehyd und Harnstoff bzw. Harnstoff-Melamin zunehmend in Richtung eines äquimolaren Verhältnisses (d. h. ein molares Verhältnis von 1 : 1) geführt. Nachteilig dabei ist allerdings, dass die Reaktivität der Bindemittel bzw. Klebstoffe reduziert wird, so dass der Anteil an Bindemittel in den Holzwerkstoffen erhöht werden muss, um eine benötigte Plattenfestigkeit zu erreichen. Entsprechend besteht der Nachteil dieses Ansatzes darin, dass aufgrund der reduzierten Reaktivität der Leime bzw. Bindemittel sich die Presszeit verlängert, was zu einer Verringerung der Produktionsmenge und somit zu einer Erhöhung der Kosten führt.

Eine weitere Möglichkeit zur Reduzierung des Formaldehydgehaltes in den Bindemitteln besteht zum anderen in der Zugabe von Formaldehydfängern, die allerdings Mehrkosten verursachen und die Produkteigenschaften nachteilig beeinflussen können. Diese Formaldehydfänger sind typischerweise Verbindungen, die mit Formaldehyd reagieren können und somit einen Teil des während des Verarbeitungsvorganges, insbesondere während des Pressvorganges, freigesetzten Formaldehyds in der Platte binden. Bekannte Formaldehydfänger sind z. B. Harnstoff oder Bisulfit. Ein Nachteil der Verwendung von Formaldehydfängern besteht allerdings darin, dass durch deren Zugabe die Reaktivität des Leimes bzw. Bindemittels teilweise gesenkt wird, bzw. dass durch die verwendeten Formaldehydfänger Stoffe in die Holzwerkstoffplatten gelangen, die in der Nutzung der Platten oder deren Entsorgung kritisch einzustufen sind. So ist es z. B. bekannt, dass Holzwerkstoffplatten, die eine erhöhte Salzmenge enthalten, häufig eine höhere Ausgleichsfeuchte besitzen und damit bei klimatischen Änderungen größeren Dimensionsänderungen unterworfen sind. Generell ist es auch nachteilig, wenn salzhaltige (Schwefel)Platten im Rahmen der Entsorgung verbrannt werden und dann zu Schwefeldioxidemissionen führen. Entsprechend können die Nachteile der Verwendung von Formaldehydfängern wie folgt zusammengefasst werden: Zusätzliche Formaldehydfänger verursachen höhere Kosten, die Zugabe von Formaldehydfängern erfordert eine Anpassung der Verarbeitungstechnologie, erhöhte Dimensionsänderungen der mit Formaldehydfängern hergestellten Holzwerkstoffplatten.

Aus diesem Grund ist es wünschenswert formaldehydfreie Klebstoffe bzw. Bindemittel bei der Herstellung von Holzwerkstoffen einzusetzen. Mögliche Alternativen zu den formaldehydhaltigen Harzen basieren auf Isocyanaten, wie zum Beispiel polymeres Diphenylmethandiisocyanat (PMDI) oder proteinbasierten Klebstoffen. Diese alternativen Bindemittel weisen allerdings den Nachteil der begrenzten Verfügbarkeit und hoher Preise auf.

Bei der Lagerung und Verarbeitung von PMDI-Leimen muss zum Beispiel durch aufwändige Anlagentechnologie den Eigenschaften dieses Leimes Rechnung getragen werden (Feuchteempfindlichkeit, hohe Reaktivität, Toxizität usw.)

Ein alternativer Ansatz zur Bereitstellung von formaldehydfreien Bindemitteln wird in der WO 2011/138 458 und der WO 2014/027 115 beschrieben. Hier wird ein Bindemittel vorgestellt, welches durch Reaktion von Kohlenhydraten mit Polyaminen hergestellt wird. Als Kohlenhydrate werden insbesondere Monosacharide wie Glukose, Fruktose und andere verwendet, die durch Umsetzung mit einem primären Polyamin gebildet werden. Das so gebildete Zucker-Amin-Polymer ist als Klebstoff einsetzbar. Die so hergestellten Kondensate sind allerdings nur bedingt wasserlöslich, wodurch sie für die Herstellung von Holzwerkstoffplatten nur schwer einsetzbar sind, da nahezu alle bekannten Bindemittel eine relativ gute Wasserlöslichkeit besitzen. Ein weiterer Nachteil der beschriebenen formaldehydfreien Zucker-Amin-Polymere ist deren relativ geringe Fähigkeit zur Vernetzung, wodurch nur ungenügend hohe Bindeeigenschaften erreicht werden.

Entsprechend besteht ein großer Bedarf an Klebstoffen, die Formaldehyd-frei sind aber gleichzeitig die obigen Nachteile nicht aufweisen. Es war daher die technische Aufgabe der vorliegenden Erfindung einen Leim bzw. ein Bindemittel zu entwickeln, der auf Grund seiner Zusammensetzung kein Formaldehyd emittiert und trotzdem noch mit den üblichen Parametern verarbeitet werden kann. Zudem sollte das Bindemittel hinsichtlich seiner Eigenschaften als einfach herstellbar, einfach zu lagern und einfach zu verarbeiten sein. Auch bezüglich der Toxizität sollte das Bindemittel unkritisch sein.

Die gestellte Aufgabe wird durch eine Bindemittelzusammensetzung mit den Merkmalen des Anspruchs 1 sowie durch ein Verfahren zur Herstellung der Bindemittelzusammensetzung gemäß Anspruch 13 gelöst.

Entsprechend wird gemäß der vorliegenden Erfindung eine Bindemittelzusammensetzung, insbesondere für lignocellulose- und faserhaltige Platten, bereitgestellt, die in einem mehrstufigen Verfahren herstellbar ist. Das mehrstufige Verfahren zur Herstellung der erfindungsgemäßen Bindemittelzusammensetzung umfasst dabei die folgenden Schritte:
a) Reaktion von mindestens einem Mono- und/oder Disaccharid mit mindestens einem Amid der allgemeinen Formel R¹-CONH₂, wobei
   - R¹ Alkoxy, Carboxy, substituiertes und nicht-substituiertes Amino, Aryloxy, Acyloxy, Alkylcarbonyl, substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, substituiertes und nicht-substituiertes Cycloalkenyl, die durch -O- oder -NH- unterbrochen sein können, ist,
b) Zugabe von mindestens einem Dialdehyd oder mindestens einem Dialdehyd-Äquivalent zu der Mischung aus Schritt a), und
c) Zugabe von mindestens einem Verdickungsmittel.

Im ersten Reaktionsschritt a) kommt es durch die Reaktion von einem Mono- und/oder Disaccharid mit dem mindestens einen Amid zur Ausbildung eines Vorkondensates bzw. Vorproduktes, welches wasserlöslich ist und einen Wassergehalt von 20 bis 60 Gew% Wasser, bevorzugt 30 bis 50 Gew% Wasser aufweist. Dieses Vorprodukt bzw. Vorkondensat weist eine hohe Lagerstabilität auf und kann aufgrund der verwendeten Reaktionskomponenten (Zucker und z. B. Harnstoff als Amid) ungefährlich gelagert werden.

Das in im Verfahrensschritt a) gebildete Vorkondensat ist dünnflüssig und weist daher eine geringe Viskosität auf. Die Dünnflüssigkeit bzw. Fließfähigkeit als ein Äquivalent oder Maß für die Viskosität kann anhand der Auslaufdauer aus einem Auslaufbecher nach DIN 53 211 (Düse 4 mm, 20°C) bestimmt werden. Die Auslaufdauer für das in Schritt a) gebildete Vorkondensat beträgt vorliegend zwischen 10 und 20 s , bevorzugt zwischen 12 und 18 s, insbesondere bevorzugt zwischen 14 und 16 s.

In einer Ausführungsform der vorliegenden Bindemittelzusammensetzung werden reduzierende Mono- und/oder Disaccharide verwendet. Unter reduzierenden Mono- oder Disacchariden sind im Sinne der vorliegenden Anmeldung solche Saccharide zu verstehen, die über mindestens eine Aldehydgruppe im linearen Zustand verfügen. Nicht reduzierende Saccharide hingegen verfügen über keine freien Aldehydgruppen. Ein Beispiel für ein nicht reduzierendes Disaccharid ist Saccharose, in welchem die beiden Monosaccharide Glukose und Fruktose unter neutralen und basischen Bedingungen über eine α,β-1,2- Glykosidische Bindung in Acetalform miteinander verbunden vorliegen. Allerdings ist unter sauren Bedingungen eine Spaltung der Saccharose in die reduzierenden Monosaccharide Glukose und Fructose möglich.

In einer bevorzugten Ausführungsform der vorliegenden Bindemittelzusammensetzung werden als Monosaccharide Pentosen und Hexosen verwendet. Pentosen und Hexosen sind dabei insbesondere ausgewählt aus der Gruppe enthaltend Arabinose, Ribose, Xylose, Glukose (Dextrose), Mannose, Galaktose und Fruktose. Die genannten Saccharide können sowohl in ihrer D- als auch in ihrer L-Form verwendet werden.

In einer weitergehenden Variante der vorliegenden Bindemittelzusammensetzung ist der Rest R¹ des verwendeten mindestens einen Amides ausgewählt aus der Gruppe enthaltend Alkoxy, Acryloxy, Acyloxy, substituiertes und nicht-substituiertes Amino.

Der Rest R¹ ist vorteilhafterweise ausgewählt aus einer Gruppe enthaltend nicht-substituiertes Amino, substituiertes Carbamoyl -NHCO-R², wobei R² H, Alkyl, Alkenyl oder eine substituierte oder nicht-substituierte Amino-Gruppe sein kann, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy. Besonders bevorzugte R¹-Gruppen sind C₁₋₄ Alkoxygruppen, insbesondere Methoxy und Ethoxy, -NH₂, -NHCONH₂.

Der Rest R¹ kann auch ausgewählt sein aus einer Gruppe umfassend substituiertes und nicht-substituiertes C₁-C₂₀-Alkyl, insbesondere C₂-C₁₀-Alkyl, substituiertes und nicht-substituiertes C₂-C₆-Alkenyl, substituiertes und nicht-substituiertes C₃-C₈-Cycloalkyl und substituiertes und nicht-substituiertes C₃-C₈-Cycloalkenyl. Besonders bevorzugt ist der Rest R¹ ausgewählt aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl.

In einer besonders bevorzugten Ausführungsform ist das mindestens eine Amid ausgewählt aus der Gruppe enthaltend Harnstoff, Urethan (Carbamidsäureethylester), Biuret (Carbamoylharnstoff), Semicarbazide und Semicarbazone. Der Harnstoff kann auch in zyklischer Form vorliegen, insbesondere in Form der Cyanursäure (2,4,6-Trihydroxy-1,3,5-triazin).

Die Umsetzung eines Mono- bzw. Disaccharides mit einem Amid erfolgt im Sinne der Maillard-Reaktion, die für die Reaktion von reduzierendem Zucker mit einer Aminogruppe von Aminosäuren unter Braunfärbung (typisch für Koch- und Brataromen von Lebensmitteln) beschrieben worden ist. Dabei bildet sich im ersten Schritt der Reaktion ein Derivat eines N-Glycosylamins, aus welchem durch die so genannte Amadori-Umlagerung das Derivat einer Ketose entsteht. Dies ist beispielhaft in der folgenden schematischen Gleichung von Glucose als Monosaccharid und Harnstoff als Amid dargestellt.

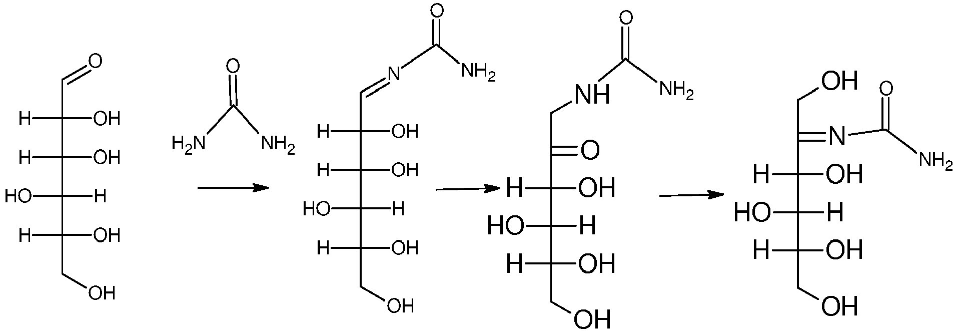

Wie auch im Falle der bekannten Maillard-Reaktion weist das in Schritt a) gebildete Vorkondensat aus Glukose und Harnstoff einen braunen bis rotbräunlichen Farbumschlag auf.

Der Begriff "substituiert", in obiger Verwendung für R¹ und R² mit "Alkyl", "Alkenyl", "Aryl", etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphtyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie hier verwendet, bezeichnet bevorzugt einen Rest der Formel R-C=C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie hierin verwendet, bezeichnet bevorzugt aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten substituiert sind.

Der Begriff "Cycloalkyl" umfasst bevorzugt die Gruppen Cyclopropyl, Cyclobutyl, Cyclopentyl, Cyclohexyl und Cycloheptyl.

Der Begriff "Cycloalkenyl" umfasst bevorzugt substituierte oder nicht-substituierte cyclische Gruppen wie Cyclopentenyl oder Cyclohexenyl. Auch werden vom dem Begriff "Cycloalkenyl" cyclische Gruppen mit konjugierten Doppelbindungen wie z.B Cyclohexadiene abgedeckt.

Der Begriff "Alkenyl" umfasst im Sinne der vorliegenden Anmeldungen Gruppen mit einer oder mehreren Doppelbindungen, wobei die Doppelbindungen auch in konjugierter Form vorliegen können, wie z.B. Butadiene.

Das im Verfahrensschritt b) verwendete Dialdehyd ist in einer Variante ein C2-C8 Dialdehyd, bevorzugt ein C2-C5 Dialdehyd, insbesondere bevorzugt ein C2C4 Dialdehyd. Im Allgemeinen sind unter Dialdehyde organische Verbindungen zu verstehen, die zwei Aldehydgruppen -CHO im Molekül enthalten.

In einer Ausführungsvariante des vorliegenden Verfahrens ist das mindesten eine Dialdehyd ausgewählt aus der Gruppe enthaltend Glyoxal (Ethandial), Malondialdehyd (Propandial), Succinaldehyd (Butandial), Glutaraldehyd (Pentandial) oder Glutacondialdehyd.

Besonders bevorzugt ist die Verwendung von Glyoxal, welches als wässrige Lösung mit 40 % und als trimeres, festes Hydrat (3 C₂H₂O₂ · 2 H₂O; Dampfdruck bei 26 °C: 378 hPa) eingesetzt werden kann.

Es ist ebenfalls möglich, mindestens einen Dialdehyd in Form eines geeigneten Reaktionsäquivalentes einzusetzen. So können z.B. Salze der zu den Dialdehyden korrespondierenden Enol-Formen eingesetzt werden.

Auch ist es generell möglich und vorstellbar aromatische Dialdehyde, wie die aromatischen, isomeren Phthalaldehyd, Isophthalaldehyd und Terephthalaldehyd in der vorliegenden Bindemittelzusammenstzung zu verwenden.

In einer weiteren Variante der vorliegenden Bindemittelzusammensetzung beträgt das Gewichtsverhältnis von dem mindestens einen Mono- oder Disaccharid und dem mindestens einen Amid in Schritt a) 2:1 bis 1:2, bevorzugt 1,5: 1 bis 1: 1.

Das Gewichtsverhältnis von dem mindestens einen in Schritt a) verwendeten Amid und dem in Schritt b) zugefügten mindestens einem Dialdehyd liegt bei 1 : 3, bevorzugt 1 : 2,5, insbesondere bevorzugt 1 : 2. Im Falle der Verwendung von Glyoxal beträgt das Gewichtsverhältnis von Amid (zum Beispiel Harnstoff) zu Glyoxal zwischen 1: 2,5 und 1: 2,0.

Ein erheblicher Vorteil ist des vorliegenden Bindemittels besteht darin, dass sich die Molverhältnisse der einzelnen Komponenten in einem weiten Bereich variieren lassen.

Ein weiterer besonderer Vorteil des vorliegenden Bindemittels ist, das sowohl das Zwischenprodukt (Kondensationsprodukt aus Amid und Zucker) als auch das fertige Bindemittel bzw. der fertige Leim in relativ hohen Konzentrationen (> 70 %) hergestellt und gelagert werden können.

Das in im Verfahrensschritt b) gebildete Produkt ist ebenfalls noch relativ dünnflüssig und weist eine Auslaufdauer als Viskositätsäquivalent zwischen 10 und 20 s , bevorzugt zwischen 12 und 18 s, insbesondere bevorzugt zwischen 14 und 16 s auf.

Aus diesem Grund wird erfindungsgemäß in einem weiteren Schritt c) mindestens ein Verdickungsmittel zugegeben. Die Zugabe eines Verdickungsmittels ist vorteilhaft, um die Viskosität der Bindemittelzusammensetzung so einzustellen, dass ein Eindringen des Bindemittels in die Holzfasern bzw. Holzfaserplatte aufgrund einer zu hohen Dünnflüssigkeit bzw. zu niedriger Viskosität verhindert wird. Als Verdickungsmittel zur Viskositätseinstellung bieten sich natürliche Verdickungsmittel oder auch synthetische Verdickungsmittel an.

Als organische Verdickungsmittel können Stärke, Gelatine, Casein aber auch Mehle, wie zum Beispiel Weizenmehl, Roggenmehl, Guarkernmehl, Johannesbrotkernmehl verwendet werden. Bei der Verwendung von herkömmlichen Mehlen ist es auch möglich, biologisch verunreinigte Mehle zu verwenden, da aufgrund der späteren Verarbeitung der Holzwerkstoffe und der hohen Temperaturen während des Herstellungsprozesses der Holzwerkstoffplatten die biologische Verunreinigung, zum Beispiel in Form von schädigenden Mikroorganismen, zerstört wird.

Als weitere Verdickungsmittel können abgewandelte Naturstoffe, wie zum Beispiel Hydroxyethylcellulose, Carboxymethylcellulose, Hydroxypropylmethylcellulose, Hydroxpropylcellulose oder Ethylhydroxyethylcellulose eingesetzt werden. Synthetische Verdickungsmittel, wie Polyvinylalkohole, Polyacrylsäure, Polymetacrylsäure, Polyacrylamide, Polyvinylpyrolidone und Polyethylenglycole sind auch einsetzbar.

Das Verdickungsmittel kann in einer Menge von 5 bis 30 Gew%, bevorzugt 10 bis 15 Gew%, in Abhängigkeit vom gewünschten Viskositätsgrad der Bindemittelzusammensetzung zugegeben werden.

Die vorliegende Bindemittelzusammensetzung weist verschiedene Vorteile gegenüber den üblichen Bindermitteln auf. So sind die verwendeten Rohstoffe in beliebiger Menge verfügbar. Die Formaldehydemission ist vollständig reduziert und die Zusatzkomponenten weisen keine Toxizität auf. Sowohl das Zwischenprodukt als auch das Endprodukt weisen eine hohe Lagerstabilität auf. Die Herstellung des Bindemittels als auch deren Verwendung erfordert keine aufwändige Prozessanpassung. Die Leimflotte kann hochkonzentriert hergestellt werden.

Die vorliegende Bindemittelzusammensetzung kann nicht nur für Flächenverklebungen, sondern auch zur Verklebung von Holzpartikeln, wie Spänen, Strands oder Fasern eingesetzt werden. Entsprechend wird die vorliegende Bindemittelzusammensetzung bevorzugt als Bindemittel für lignocellulosehaltige Platten, insbesondere für Holzfaserplatten, Holzspanplatten, Gipsfaserplatten oder auch Zementfaserplatten verwendet. Auch ist die Verwendung der vorliegenden Bindemittelzusammensetzung als Klebstoff für die Sperrholz-, Brettschichtholz- oder Furnierschichtholz-Fertigung (laminated veneer lumber, LVL) möglich.

Die vorliegende Bindemittelzusammensetzung wird in einem Verfahren hergestellt, welches die folgenden Schritte umfasst:
a) Vermischen von mindestens einem Mono- und/oder Disaccharid mit mindestens einem Amid der allgemeinen Formel R¹-CONH₂, wobei R¹ die obige Bedeutung hat, und Erwärmen der Mischung;
b) Zugabe von mindestens einem Dialdehyd oder mindestens einem Dialdehyd-Äquivalent zu der Mischung aus Schritt a), und
c) Zugabe von mindestens einem Verdickungsmittel.

In einer Variante des vorliegenden Verfahrens wird der Schritt a) des Vermischens von mindestens einem Mono- und/oder Disaccharid mit mindestens einem Amid der allgemeinen Formel R¹-CONH₂ bei einem pH-Wert zwischen 3 und 6, bevorzugt zwischen 4 und 5 und einer Temperatur zwischen 30°C und 100°C, bevorzugt zwischen 60°C und 90°C, durchgeführt. Die Durchführung des Schritts a) unter sauren Bedingungen bedingt zum einen, dass die zyklischen Formen der verwendeten Saccharide in die entsprechenden linearen Formen überführt werden, wodurch die Reaktion der Saccharide mit dem Amid begünstigt wird. Auch werden Disaccharide in einem sauren Milieu in die entsprechenden Monosaccharide gespalten und können anschließend mit dem Amid, wie zum Beispiel Harnstoff, zur Reaktion gebracht werden.

In einer weiteren Variante des vorliegenden Verfahrens wird Schritt b) der Zugabe von mindestens einem Aldehyd oder mindestens einem Aldehyd-Äquivalent bei einem pH-Wert zwischen 5 und 8, bevorzugt zwischen 6 und 7 unter einer Temperatur zwischen 20°C und 80°C, bevorzugt zwischen 40°C und 70°C, durchgeführt.

Erfindungsgemäß wird in einem weiteren Schritt c) das mindestens eine Verdickungsmittel zugegeben. Zur Art und Menge des zugegebenen Verdickungsmittels wird auf die obigen Ausführungen verwiesen.

Die erfindungsgemäße Bindemittelzusammensetzung und das entsprechende Verfahren zu deren Herstellung weist eine Vielzahl von Vorteilen auf. So sind die zum Einsatz kommenden Rohstoffe in beliebiger Menge verfügbar. Eine aufwändige Prozessanpassung wird insbesondere durch die Einstellung der Viskosität der Bindemittelzusammensetzung durch Zugabe eines geeigneten Verdickungsmittels vermieden. Aufgrund des in Verfahrensschritt b), das heißt in der zweiten Verfahrensstufe, zugegebenen Dialdehydes wird die Emission von Formaldehyde (vollständig) reduziert.

Ein weiterer wesentlicher Vorteil der vorliegenden Bindemittelzusammensetzung und des entsprechenden Herstellungsverfahrens besteht in der Zweistufigkeit des Herstellungsprozesses und somit in der Möglichkeit der Bereitstellung eines separaten, in Schritt a) hergestellten Vorkondensates bzw. Vorproduktes, welches lagerstabil ist und ungefährlich gelagert werden kann. Im Gegensatz dazu ist bei den herkömmlichen Formaldehydbindemitteln eine zeitnahe Verarbeitung notwendig, um eine ausreichende Reaktivität des formaldehydhaltigen Bindemittels zu gewährleisten.

Die Erfindung wird nachfolgend anhand mehrerer Ausführungsbeispiele näher erläutert.

### Ausführungsbeispiel 1:

In einem Rundkolben werden 180,7 g Fructose und 126 ml Wasser mit 0,63 ml Phosphorsäure ( halbkonzentriert ) unter Rühren langsam erhitzt. Wenn die Lösung 60°C erreicht hat, werden 84 g Harnstoff zugeben. Es wird weiter unter Rühren zum Sieden erhitzt. Dabei verfärbt sich die Lösung langsam ins rötlichbraune. Die Temperatur wurde nach 2h auf ca. 65° C abgesenkt.

Dieses stabile Vorprodukt kann auch auf Raumtemperatur heruntergekühlt werden und längere Zeit gelagert werden, ohne dass Weiterreaktionen erfolgen. Zur Weiterverarbeitung wird entweder der noch warme Ansatz verwendet oder ein gelagerter Ansatz auf 65°C erwärmt.

Der pH-Wert wurde durch Zugabe von wenig Natronlauge auf 7,5 eingestellt. Anschließend wurden 176,4 g einer Glyoxal (100 Gew.%) zugegeben und noch ca. 20 min bei 65°C weitergerührt und dann abgekühlt.

Der resultierende Leim wurde mit 9,9 g eines Andickers ( Guarankernmehl ) versetzt und für die Flächenverklebung von HDF verwendet. Zu diesem Zweck wurde der Leim (ca. 5 g) auf eine HDF im Format 10 x 10 cm aufgestrichen. Eine zweite HDF im gleichen Format wurde auf die beleimte HDF aufgelegt. Die beiden Platten wurden mit einer Schraubzwinge aufeinander fixiert und ca. 2h bei 100°C im Ofen gelagert. Nach dem Aushärten des Leimes war bei einem Aufstechversuch ein Kohäsionsbruch im Fügeteil beobachtbar. Als Referenz wurde ein Kauritleim mitgeprüft, der im Aufstechversuch ein ähnliches Ergebnis lieferte.

### Ausführungsbeispiel 2:

In einem Rundkolben werden unter Rühren 180,7 Glucose, 42 g Harnstoff in 176 ml Wasser mit 0,63 ml Phosphorsäure (halbkonzentriert) unter Rühren und gleichzeitigem Erwärmen aufgelöst. Es wird weiter unter Rühren bis auf 85°C erwärmt Die Temperatur wurde nach 4 h auf ca. 65° C abgesenkt.

Dieses stabile Vorprodukt kann auch auf Raumtemperatur heruntergekühlt werden und längere Zeit gelagert werden, ohne dass Weiterreaktionen erfolgen. Zur Weiterverarbeitung wird entweder der noch warme Ansatz verwendet oder ein gelagerter Ansatz auf 65°C erwärmt.

Anschließend wurden 84 g Glyoxal zugegeben, noch ca. 20 min bei 65°C weitergerührt und dann abgekühlt. Der resultierende Leim wurde mit 12,6 g eines Andickers (Weizenmehl) versetzt.

Der Leim wurde zur Flächenverklebung von HDF eingesetzt. Dabei wurden ca. 5 g des Leimes auf eine HDF (10 x 10 cm x Dicke aufgestrichen. In das Leimbett wurde eine zweite HDF eingelegt. Die beiden HDF wurden mit einer Schraubzwinge aufeinander befestigt und 2 h bei 100°C in einem Ofen erwärmt. Nach dem Aushärten des Leimes war bei einem Aufstechversuch ein Kohäsionsbruch im Fügeteil beobachtbar. Als Referenz wurde ein Kauritleim mitgeprüft, der im Aufstechversuch ein ähnliches Ergebnis lieferte.

Besonders vorteilhaft ist an dem Leimsystem ist, dass man ein Zwischenprodukt längere Zeit (mehrere Wochen) lagern kann, ohne dass signifikante Weiterreaktionen stattfinden.

Ein erheblicher Vorteil ist bei dem Leim, dass sich die Molverhältnisse der einzelnen Komponenten in einem weiten Bereich variieren lassen. In der folgenden Liste sind einige Ansätze beschrieben, die die Variationsmöglichkeiten des Leimes bzw. Bindemittels zeigen.

| Komponente Ansatz \ | Zucker* in g/in mol | Harnstoff in g/ in mol | Phosphorsäure in ml ( halbkonz. ) | Glyoxal in g / in mol | Wasser In ml | Andicker** in g |
|---|---|---|---|---|---|---|
| 1 | 180,7 / 1,0 | 71,4 / 1,19 | 0,63 | 176,4 / 3,04 | 126 | 27,7 |
| 2 | 180,7 / 1,0 | 84 / 1,4 | 0,63 | 176,4/3,04 | 189 | 13,9 |
| 3 | 180,7 / 1,0 | 84/ 1,4 | 0,63 | 176,4/3,04 | 189 | 9,9 |
| 4 | 180,7 / 1,0 | 84 / 1,4 | 0,63 | 176,4 / 3,04 | 126 | 9,9 |
| 5 | 180,7 / 1,0 | 42 / 0,72 | 0,63 | 84 / 1,45 | 176 | 12,6 |

| | | | | | | |
|---|---|---|---|---|---|---|
| *Als Zucker wurde jeweils Fructose eingesetzt ** Als Andicker wurde Guarankernmehl eingesetzt | | | | | | |

## Patentansprüche

1. Formaldehydfreie Bindemittelzusammensetzung, für lignocellulosehaltige Platten herstellbar in einem Verfahren umfassend die Schritte
a) Reaktion von mindestens einem Mono- und/oder Disaccharid mit mindestens einem Amid der allgemeinen Formel R¹-CONH₂, wobei
- R¹ Alkoxy, Carboxy, substituiertes und nicht-substituiertes Amino, Aryloxy, Acyloxy, Alkylcarbonyl, substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, substituiertes und nicht-substituiertes Cycloalkenyl, die durch -O- oder -NH- unterbrochen sein können, ist,
b) Zugabe von mindestens einem Dialdehyd oder mindestens einem Dialdehyd-Äquivalent zu der Mischung aus Schritt a), und
c) Zugabe von mindestens einem Verdickungsmittel.

2. Bindemittelzusammensetzung nach Anspruch 1, **dadurch gekennzeichnet, dass** als Monosaccharide Pentosen und Hexosen verwendet werden.

3. Bindemittelzusammensetzung nach einem der vorhergehenden Ansprüche, **dadurch gekennzeichnet, dass** R¹ ausgewählt ist aus der Gruppe enthaltend, Alkoxy, Aryloxy, Acyloxy, substituiertes und nicht-substituiertes Amino ist.

4. Bindemittelzusammensetzung nach einem der vorhergehenden Ansprüche, **dadurch gekennzeichnet, dass** das mindestens eine Amid ausgewählt aus der Gruppe enthaltend Harnstoff, Urethan (Carbamidsäureethylester), Biuret (Carbamoylharnstoff), und davon abgeleitete Semicarbazide und Semicarbazone.

5. Bindemittelzusammensetzung nach einem der vorhergehenden Ansprüche, **dadurch gekennzeichnet, dass** das mindestens eine Dialdehyd ein C2-C8 Dialdehyd,

6. Bindemittelzusammensetzung nach einem der vorhergehenden Ansprüche, **dadurch gekennzeichnet, dass** das mindesten eine Dialdehyd ausgewählt ist aus der Gruppe enthaltend Glyoxal (Ethandial), Malondialdehyd (Propandial), Succinaldehyd (Butandial), Glutaraldehyd (Pentandial) oder Glutacondialdehyd.

7. Bindemittelzusammensetzung nach einem der vorhergehenden Ansprüche, **dadurch gekennzeichnet, dass** das Gewichtsverhältnis von dem mindestens einen Mono- oder Disaccharid und dem mindestens einen Amid in Schritt a) 2:1 bis 1:2, beträgt.

8. Bindemittelzusammensetzung nach einem der vorhergehenden Ansprüche, **dadurch gekennzeichnet, dass** das Gewichtsverhältnis von dem mindestens einen Amid und dem mindestens einen Dialdehyd 1 : 3 beträgt.

9. Bindemittelzusammensetzung nach einem der vorhergehenden Ansprüche, **dadurch gekennzeichnet, dass** das mindestens eine Verdickungsmittel ein natürliches Verdickungsmittel oder ein synthetisches Verdickungsmittel ist.

10. Bindemittelzusammensetzung nach Anspruch 9, **dadurch gekennzeichnet, dass** als natürliches Verdickungsmittel Stärke, Gelatine, Casein, Weizenmehl, Roggenmehl, Guarkernmehl, Johannesbrotkernmehl verwendet werden.

11. Bindemittelzusammensetzung nach einem der vorhergehenden Ansprüche, **dadurch gekennzeichnet, dass** das mindestens eine Verdickungsmittel in einer Menge von 5 bis 30 Gew% zugegeben wird.

12. Verwendung einer Bindemittelzusammensetzung nach einem der vorhergehenden Ansprüche als Bindemittel für lignocellulosehaltige Platten.

13. Verfahren zur Herstellung einer Bindemittelzusammensetzung nach einem der Ansprüche 1 bis 11 umfassend die Schritte:
a) Vermischen von mindestens einem Mono- und/oder Disaccharid mit mindestens einem Amid der allgemeinen Formel R¹-CONH₂, wobei R¹ die obige Bedeutung hat, und Erwärmen der Mischung;
b) Zugabe von mindestens einem Dialdehyd oder mindestens einem Dialdehyd-Äquivalent zu der Mischung aus Schritt a), und
c) Zugabe von mindestens ein Verdickungsmittel.

14. Verfahren nach Anspruch 13, **dadurch gekennzeichnet, dass** der Schritt a) des Vermischens von mindestens einem Mono- und/oder Disaccharid mit mindestens einem Amid der allgemeinen Formel R¹-CONH₂ bei einem pH-Wert zwischen 3 und 6, und einer Temperatur zwischen 30°C und 100°Cdurchgeführt wird.

15. Verfahren nach Anspruch 13 oder 14, **dadurch gekennzeichnet, dass** der Schritt b) der Zugabe von mindestens einem Dialdehyd oder mindestens einem Dialdehyd-Äquivalent bei einem pH-Wert zwischen 5 und 8und einer Temperatur zwischen 20°C und 80°C durchgeführt wird.

## Claims

1. A formaldehyde-free binder composition for panels containing lignocellulose obtainable in a method comprising the steps of
a) reaction of at least one mono- and/or disaccharide with at least one amide of the general formula R¹ -CONH₂, wherein
- R¹ is alkoxy, carboxy, substituted and unsubstituted amino, aryloxy, acyloxy, alkylcarbonyl, substituted and unsubstituted alkyl, substituted and unsubstituted aryl, substituted and unsubstituted alkenyl, substituted and unsubstituted alkynyl, substituted and unsubstituted cycloalkyl, substituted and unsubstituted cycloalkenyl, which may be interrupted by -O- or -NH-,
b) adding at least one dialdehyde or at least one dialdehyde equivalent to the mixture of step a), and
c) adding at least one thickening agent.

2. Binder composition according to claim 1, **characterized in that** pentoses and hexoses are used as monosaccharides.

3. Binder composition according to one of the preceding claims, **characterized in that** R¹ is selected from the group consisting of alkoxy, aryloxy, acyloxy, substituted and unsubstituted amino.

4. Binder composition according to one of the preceding claims, **characterized in that** the at least one amide is selected from the group comprising urea, urethane (carbamic acid ethyl ester), biuret (carbamoyl urea), and semicarbazides and semicarbazones derived therefrom.

5. Binder composition according to one of the preceding claims, **characterized in that** the at least one dialdehyde is a C2-C8 dialdehyde,

6. Binder composition according to one of the preceding claims, **characterized in that** the at least one dialdehyde is selected from the group comprising glyoxal (ethanedial), malondialdehyde (propanedial), succinaldehyde (butanedial), glutaraldehyde (pentanedial) or glutacondialdehyde.

7. Binder composition according to one of the preceding claims, **characterized in that** the weight ratio of the at least one mono- or disaccharide and the at least one amide in step a) is from 2:1 to 1:2.

8. Binder composition according to one of the preceding claims, **characterized in that** the weight ratio of the at least one amide and the at least one dialdehyde is 1 : 3.

9. Binder composition according to one of the preceding claims, **characterized in that** the at least one thickening agent is a natural thickening agent or a synthetic thickening agent.

10. Binder composition according to claim 9, **characterized in that** starch, gelatine, casein, wheat flour, rye flour, guar gum, locust bean gum are used as natural thickening agent.

11. Binder composition according to one of the preceding claims, **characterized in that** the at least one thickening agent is added in an amount of 5 to 30% by weight.

12. Use of a binder composition according to any one of the preceding claims as a binder for panels containing lignocellulose.

13. A method of preparing a binder composition according to any one of claims 1 to 11 comprising the steps of:
a) mixing at least one mono- and/or disaccharide with at least one amide of the general formula R¹ -CONH₂, wherein R¹ has the above meaning, and heating the mixture;
b) adding at least one dialdehyde or at least one dialdehyde equivalent to the mixture of step a), and
c) adding at least one thickening agent.

14. Method according to claim 13, **characterized in that** the step a) of mixing at least one mono- and/or disaccharide with at least one amide of the general formula R¹ -CONH₂ is carried out at a pH between 3 and 6, and a temperature between 30°C and 100°C.

15. Method according to claim 13 or 14, **characterized in that** the step b) of adding at least one dialdehyde or at least one dialdehyde equivalent is carried out at a pH between 5 and 8and at a temperature between 20°C and 80°C.

## Revendications

1. Composition de liant sans formaldéhyde pour des plaques contenant de la lignocellulose pouvant être fabriquée dans un procédé comprenant les étapes de
a) réaction d'au moins un mono- et/ou disaccharide avec au moins un amide de la formule générale R¹-CONH₂, dans laquelle
- R¹ est un alcoxy, un carboxy, un amino substitué et non substitué, un aryloxy, un acyloxy, un alkylcarbonyle, un alkyle substitué et non substitué, un aryle substitué et non substitué, un alcényle substitué et non substitué, un alcynyle substitué et non substitué, un cycloalkyle substitué et non substitué, un cycloalcényle substitué et non substitué, qui peuvent être interrompus par -O- ou -NH-,
b) l'ajout d'au moins un dialdéhyde ou d'au moins un équivalent de dialdéhyde au mélange issu de l'étape a), et
c) l'ajout d'au moins un agent épaississant.

2. Composition de liant selon la revendication 1, **caractérisée en ce que** sont utilisés en tant que monosaccharides des pentoses et des hexoses.

3. Composition de liant selon l'une quelconque des revendications précédentes, **caractérisée en ce que** R¹ est choisi parmi le groupe contenant de l'alcoxy, de l'aryloxy, de l'acyloxy, de l'amino substitué et non substitué.

4. Composition de liant selon l'une quelconque des revendications précédentes, **caractérisée en ce que** l'au moins un amide est choisi parmi le groupe contenant de l'urée, de l'uréthane (ester éthylique de l'acide carbamique), du biuret (urée de carbamoyle), et des semicarbazides et semicarbazones dérivées de ceux-ci.

5. Composition de liant selon l'une quelconque des revendications précédentes, **caractérisée en ce que** l'au moins un dialdéhyde est un dialdéhyde en C2-C8.

6. Composition de liant selon l'une quelconque des revendications précédentes, **caractérisée en ce que** l'au moins un dialdéhyde est choisi parmi le groupe contenant du glyoxal (éthanedial), du dialdéhyde malonique (propanedial), de l'aldéhyde succinique (butanedial), de l'aldéhyde glutarique (pentanedial) ou du glutacondialdéhyde.

7. Composition de liant selon l'une quelconque des revendications précédentes, **caractérisée en ce que** le rapport de poids entre l'au moins monosaccharide ou disaccharide et l'au moins un amide est à l'étape a) de 2:1 à 1:2.

8. Composition de liant selon l'une quelconque des revendications précédentes, **caractérisée en ce que** le rapport de poids entre l'au moins un amide et l'au moins un dialdéhyde est de 1:3.

9. Composition de liant selon l'une quelconque des revendications précédentes, **caractérisée en ce que** l'au moins un agent épaississant est un agent épaississant naturel ou un agent épaississant synthétique.

10. Composition de liant selon la revendication 9, **caractérisée en ce que** sont utilisés en tant qu'agent épaississant naturel de l'amidon, de la gélatine, de la caséine, de la farine de blé, de la farine de seigle, de la gomme de guar, de la gomme de caroube.

11. Composition de liant selon l'une quelconque des revendications précédentes, **caractérisée en ce que** l'au moins un agent épaississant est ajouté en une quantité de 5 à 30 % en poids.

12. Utilisation d'une composition de liant selon l'une quelconque des revendications précédentes en tant que liant pour des plaques contenant de la lignocellulose.

13. Procédé de fabrication d'une composition de liant selon l'une quelconque des revendications 1 à 11 comprenant les étapes :
a) de mélange d'au moins un mono- et/ou disaccharide avec au moins un amide de la formule générale R¹-CONH₂, dans lequel R¹ a la signification mentionnée ci-dessus, et de chauffe du mélange ;
b) d'ajout d'au moins un dialdéhyde ou d'au moins un équivalent de dialdéhyde au mélange issu de l'étape a), et
c) d'ajout d'au moins un agent épaississant.

14. Procédé selon la revendication 13, **caractérisé en ce que** l'étape a) du mélange d'au moins un mono- et/ou disaccharide à au moins un amide de la formule générale R¹-CONH₂ est effectué à un pH entre 3 et 6 et à une température entre 30 °C et 100 °C.

15. Procédé selon la revendication 13 ou 14, **caractérisé en ce que** l'étape b) de l'ajout d'au moins un dialdéhyde ou d'au moins un équivalent de dialdéhyde est effectué à un pH entre 5 et 8 et à une température entre 20 °C et 80 °C.
